Europäisches Patentamt

European Patent Office

Office européen des brevets

(19)

(11) Veröffentlichungsnummer: **0 232 879**

**A2**

(12) # EUROPÄISCHE PATENTANMELDUNG

(21) Anmeldenummer: 87101730.7

(22) Anmeldetag: 09.02.87

(51) Int. Cl.⁴: **C08L 77/00** , C08L 25/08 ,
C08L 23/08 , C08L 35/00 ,
C08L 33/00 , C08L 9/00

(30) Priorität: 12.02.86 DE 3604376

(43) Veröffentlichungstag der Anmeldung:
19.08.87 Patentblatt 87/34

(84) Benannte Vertragsstaaten:
BE CH DE FR GB IT LI NL

(71) Anmelder: BASF Aktiengesellschaft
Carl-Bosch-Strasse 38
D-6700 Ludwigshafen(DE)

(72) Erfinder: Taubitz, Christof, Dr.
In der Dreispitz 15
D-6706 Wachenheim(DE)
Erfinder: Seiler, Erhard, Dr.
Erpolzheimer Strasse 1
D-6700 Ludwigshafen(DE)
Erfinder: Hambrecht, Juergen, Dr.
Am Klosterwald 31
D-4400 Münster-Hiltrup(DE)

(54) Thermoplastische Formmassen auf der Basis von Polyamiden.

(57) Thermoplastische Formmassen, enthaltend als wesentliche Komponenten
A) 2 bis 94 Gew.% eines Polyamids,
B) 2 bis 30 Gew.% eines Copolymeren aus im wesentlichen Ethylen und polymerisierbaren Carbonsäuren und/oder deren funktionellen Derivaten,
C) 2 bis 80 Gew.% eines Copolymeren aus vinylaromatischen Monomeren und polymerisierbaren Carbonsäuren und/oder deren funktionellen Derivaten und
D) 2 bis 30 Gew.% eines Homopolymeren eines konjugierten Diens und/oder eines Copolymeren eines konjugierten Diens mit einem copolymerisierbaren Monomeren.

EP 0 232 879 A2

## Thermoplastische Formmassen auf der Basis von Polyamiden

Die Erfindung betrifft neue thermoplastische Formmassen, die als wesentliche Komponenten

A) 2 bis 94 Gew.% eines Polyamids,

B) 2 bis 30 Gew.% eines Copolymeren aus im wesentlichen Ethylen und polymerisierbaren Carbonsäuren und/oder deren funktionellen Derivaten,

C) 2 bis 80 Gew.% eines Copolymeren aus vinylaromatischen Monomeren und polymerisierbaren Carbonsäuren und/oder deren funktionellen Derivaten, und

D) 2 bis 30 Gew.% eines Homopolymeren eines konjugierten Diens und/oder eines Copolymeren eines konjugierten Diens mit copolymerisierbaren Monomeren enthalten.

Außerdem betrifft die Erfindung die Verwendung derartiger Formmassen zur Herstellung von Formkörpern und aus den Formmassen als wesentlichen Komponenten hergestellte Formkörper. Weiterhin betrifft die Erfindung ein Verfahren zur Herstellung der erfindungsgemäßen Formmassen.

Aus der US-A 3 243 478 und US-A 3 243 479 sind Mischungen aus Polyamiden und Styrol-Acrylnitril-Copolymeren bekannt, die zur Herstellung von Formkörpern verwendet werden. Bedingt durch die - schlechte Verträglichkeit der Polymeren, die die Polymermischung ("Blend") bilden, weisen die Formkörper schlechte mechanische Eigenschaften auf und es kommt zur sogenannten Delaminierung, also zu - schichtweisen Spaltungen, in den Formkörpern.

In der GB-A 1 440 030 werden Mischungen aus Polyamiden und Styrol-(Meth)acrylsäureestern beschrieben, wobei zusätzlich noch mit Polybutadien bzw. anderen Elastomeren modifizierte Polystyrole im Polymerblend enthalten sein können. Die aus diesen Blends hergestellten Formkörper sind hinsichtlich des Gesamtbildes ihrer mechanischen Eigenschaften nicht befriedigend.

Aus der DE-OS 30 37 520 sind Blockcopolymere mit einem Polyamid und einem Styrol-Maleinsäureanhydrid-Copolymeren als Polymerblöcken bekannt. Die daraus hergestellten Formkörper zeigen zwar nur eine geringe Delaminierung, sind aber hinsichtlich anderer mechanischer Eigenschaften, insbe sondere des Verhaltens bei schlagartiger Belastung, nicht zufriedenstellend.

Aufgabe der vorliegenden Erfindung war es daher, thermoplastische Formmassen zur Verfügung zu stellen, bei denen einerseits die guten Eigenschaften von Polystyrolen und Polyamiden weitgehend erhalten bleiben, und die andererseits vorteilhafte mechanische Eigenschaften, insbesondere eine hohe Schlagzähigkeit (auch bei mehraxialer Beanspruchung) aufweisen.

Diese Aufgabe wird erfindungsgemäß durch thermoplastische Formmassen gelöst, die als wesentliche Komponenten

A) 2 bis 94 Gew.% eines Polyamids

B) 2 bis 30 Gew.% eines Copolymeren aus im wesentlichen Ethylen und polymerisierbaren Carbonsäuren und/oder deren funktionellen Derivaten,

C) 2 bis 80 Gew.% eines Copolymeren aus vinylaromatischen Monomeren und polymerisierbaren Carbonsäuren und/oder deren funktionellen Derivaten und

D) 2 bis 30 Gew.% eines Homopolymeren eines konjugierten Diens und/oder eines Copolymeren eines konjugierten Diens mit einem copolymerisierbaren Monomeren enthalten.

Weitere erfindungsgemäße Massen sind den Unteransprüchen zu entnehmen.

Die erfindungsgemäßen thermoplastischen Formmassen weisen gute mechanische Eigenschaften auf und zeichnen sich besonders durch eine hohe Schlagzähigkeit und eine hohe Lösungsmittelresistenz aus. Im Hinblick auf ihre Widerstandsfähigkeit gegen Chemikalien, Wärme und Abrieb sind sie den Styrolpolymeren überlegen, während sie im Vergleich zu Polyamiden eine stark verminderte Formschrumpfung und eine geringere Wasseraufnahme zeigen. Infolge ihrer Formstabilität eignen sich die erfindungsgemäßen Formmassen zur Herstellung von Formkörpern, an die besonders hohe Anforderungen an die Dimensionsstabilität gestellt werden. Erfindungsgemäße Formmassen, die mit Glasfasern verstärkt sind, eignen sich besonders zur Herstellung großflächiger Teile.

Im folgenden werden die wesentlichen Komponenten (A) bis (D), die die erfindungsgemäßen Formmassen aufbauen, im einzelnen beschrieben.

## Komponente A

Die Polyamide, die die Komponente (A) der erfindungsgemäßen Formmassen bilden, unterliegen hinsichtlich ihrer Struktur und ihrem Molekulargewicht keiner besonderen Beschränkung, doch werden Polyamide mit einem Molekulargewicht von 8000 bis 60.000 im allgemeinen bevorzugt.

Der Anteil der Polyamide an den thermoplastischen Formmassen liegt im Bereich von 2 bis 94 Gew.%, bevorzugt von 35 bis 80 Gew.%.

Beisiele für bevorzugte Polyamide sind die Polyamide, die sich von Lactamen mit 7 bis 13 Ringgliedern ableiten, wie Polycaprolactam, Polycapryllactam oder Polylauryllactam, sowie Polyamide, die durch Umsetzung von Dicarbonsäuren mit Diaminen erhalten werden. Alkandicarbonsäuren mit 6 bis 12, insbesondere mit 6 bis 10 C-Atomen, Terephthalsäure und Isophthalsäure zählen zu den bevorzugten Dicarbonsäuren, Alkandiamine mit 6 bis 12, insbesondere 6 bis 8 Kohlenstoffatomen, p-Xylylendiamin, Bis-(4-aminophenyl)-methan, Bis-(4-aminocyclohexyl)methan oder Bis-(4-aminophenyl)propan-2,2 zu den bevorzugten Diaminen. Sowohl die Dicarbonsäuren als auch die Diamine können einzeln oder in beliebigen Kombinationen eingesetzt werden. Ebenso ist es möglich und häufig vorteilhaft Mischungen mehrerer der genannten Polyamide für die thermoplastischen Formmassen zu verwenden.

Besondere technische Bedeutung haben Polycaprolactam, Polyhexamethylenadipinsäureamid sowie Polyamide, die aus Hexamethylendiamin und Iso-und/oder Terephthalsäure aufgebaut sind, erlangt.

Die erfindungsgemäß verwendbaren Polyamide sind an sich bekannt oder können nach an sich bekannten Verfahren aus den Monomeren hergestellt werden.

Komponente B)

Die Komponente B) ist ein Copolymeres aus im wesentlichen Ethylen und polymerisierbaren Carbonsäuren und/oder deren funktionellen Derivaten, wobei der Anteil an Ethylen im Monomergemisch vorzugsweise 40 bis 99 Gew.% und der Anteil der polymerisierbaren Carbonsäure bzw. deren funktionellen Derivaten entsprechend vorzugsweise 1 bis 60 Gew.% beträgt.

Neben der polymerisierbaren Carbonsäure bzw. deren funktionellen Derivaten kann die Komponente B) noch bis zu 50 Gew.% weiterer copolymerisierbare Monomerer, insbesondere z.B. Vinylacetat und/oder Acrylnitril, enthalten.

Als Beispiele für polymerisierbare Carbonsäuren seien hier nur stellvertretend Acrylsäure, Methacrylsäure, Fumarsäure und Maleinsäure genannt.

Bei den funktionellen Derivaten der polymerisierbaren Carbonsäuren handelt es sich bevorzugt um Carbonsäureanhydride, Carbonsäureamide, N-Phenylcarbonsäureimide und/oder Carbonsäureester. Nur stellvertretend seien hier als funktionelle Derivate Maleinsäureanhydrid, Maleinsäure-N-Phenylimid, $C_1$-$C_8$-Alkylester, Amide, $C_1$-$C_8$-Alkyl-oder Dialkylamide und Salze, insbesondere Metallsalze der I. und II. Hauptgruppe des Periodensystems der Säuren genannt. Weitere geeignete Verbindungen werden z.B. bei der Komponente C) beschrieben.

Copolymere, die Glasübergangstemperaturen unterhalb von 0°C, insbesondere unterhalb -20°C aufweisen, werden bevorzugt. Im allgemeinen sind solche Copolymere hochmolekular und weisen einen Schmelzindex (MFI) im Bereich von 1 bis 80 g/10 min (nach DIN 53 735 bei 190°C/2,16 kg Belastung gemessen) auf.

Der Anteil der Komponente B an den erfindungsgemäßen thermoplastischen Formmassen liegt im Bereich von 2 bis 30, vorzugsweise von 5 bis 20 Gew.%.

Die Komponente B) und Verfahren zu deren Herstellung sind an sich bekannt. Üblicherweise werden Ethylen und das bzw. die Comonomere(n) bei erhöhter Temperatur unter hohem Ethylendruck polymerisiert.

Komponente C)

Die Komponente C) ist ein Copolymeres aus vinylaromatischen Monomeren und polymerisierbaren Carbonsäuren und/oder deren funktionellen Derivaten.

Als vinylaromatische Monomeren werden bevorzugt Styrol und Styrolderivate verwendet, z.B. $\alpha$-Methylstyrol, o-, m-und p-Methylstyrol, Chlorstyrol und Mischungen dieser Verbindungen.

Die polymerisierbaren Carbonsäuren bzw. deren funktionelle Derivate können mit den für die Komponente B) beschriebenen entsprechenden Verbindungen identisch sein, es können aber auch verschiedene Verbindungen in den Komponenten B) und C) eingesetzt werden.

Neben den bereits für die Komponente B) beschriebenen Verbindungen seien hier nur noch zusätzlich als Beispiele Methylmaleinsäureanhydrid, Chlormaleinsäureanhydrid, Citraconsäureanhydrid, Butenylbernsteinsäureanhydrid, Tetrahydrophthalsäureanhydrid und Ester und Halbester polymerisier barer Säuren mit primären, sekundären oder tertiären Alkanolen wie Methanol, Ethanol, n-Propanol, iso-Propanol, n-Butanol, sec.-Butanol und tert.-Butanol, sowie die entsprechenden Amide und N-Phenyl-maleinimid aufgeführt. Carbonsäureanhydride, N-Phenylcarbonsäureimide und Ester werden wiederum bevorzugt.

Komponenten (C), die

60 bis 95 Gew.% Styrol,

5 bis 15 Gew.% Maleinsäureanhydrid und

0 bis 25 Gew.% Methylmethacrylat oder

60 bis 95 Gew.% Styrol,

5 bis 20 Gew.% Acryl-und/oder Methacrylsäure und

0 bis 25 Gew.% Acryl-und/oder Methacrylsäureester enthalten,

werden besonders bevorzugt.

Die Viskositätszahl (VZ) der Komponente C) liegt bevorzugt im Bereich von 20 bis 120 cm³/g, besonders im Bereich von 50 bis 90 cm³/g (bestimmt bei 25°C in 0,5 %iger Dimethylformamid-Lösung mit einem Ubbelohde-Viskosimeter nach DIN 53 726/8), was einem Molekulargewicht von vorzugsweise 5000 bis 500.000, besonders bevorzugt von 20.000 bis 200.000 entspricht).

Wie die Komponente B) kann gemäß einer weiteren Ausführungsform auch die Komponente C) neben der polymerisierbaren Carbonsäure bzw. deren funktionellen Derivaten noch weitere copolymerisierbare Monomere, insbesondere Vinylacetat und/oder Acrylnitril in Mengen von bis zu 37 Gew.% enthalten.

Der Anteil der Komponente C) an den erfindungsgemäßen Formmassen beträgt 2 bis 80, vorzugsweise 10 bis 60 Gew.%.

Herstellungsverfahren zur Herstellung der Komponente C) sind an sich bekannt. Eine bevorzugte Ausführungsform ist die kontinuierliche, thermische oder radikalische Polymerisation der Monomeren bei 120 bis 160°C und einer Verweilzeit von 2 bis 8 Stunden, gegebenenfalls unter Verwendung von Lösungsmitteln, wie z.B. Ethylbenzol.

Es wird angenommen, daß die Komponenten B) und C) eine Verträglichkeitsverbesserung der Komponenten bewirken. Worauf dieser Effekt beruht, kann noch nicht mit Sicherheit gesagt werden.

<u>Komponente D)</u>

Als Komponente D) werden Dienpolymere aus einem oder mehreren konjugierten Dienen oder Copolymere eines Diens mit weiteren copolymerisierbaren Monomeren eingesetzt. Als Monomere sind bevorzugt Butadien, 2-Methyl-Butadien und Isopren oder Gemische dieser Monomere zu nennen.

Als Beispiele für die Komponente D) seien hier kautschukartige Elastomere, wie Polybutadien, Styrol-Butadiencopolymerkautschuk, Acrylnitril-Butadiencopolymere, Styrol-Acrylnitril-Butadien-Copolymerkautschuk, Styrol-Methylmethacrylat-Butadienkautschuk, Methylmethacrylat-Butadienkautschuk oder die entsprechenden Isoprenkautschuke genannt.

Die Herstellung dieser Polymeren erfolgt in an sich bekannter Weise, wobei die Zugabenreihenfolge der einzelnen Monomeren variiert werden kann. So kann beispielsweise bei der Emulsionspolymerisation zuerst Butadien (gegebenenfalls unter Zusatz von Styrol, Acrylnitril, Acrylsäureestern und/oder Methacrylsäureestern) polymerisiert werden, gegebenenfalls unter Zusatz von geringen Mengen Vernetzungsmitteln, und anschließend werden auf die so gewonnene Pfropfgrundlage andere Monomere oder Gemische wie z.B. Acrylsäure-und Methacrylsäureester, Acryl-und Methacrylamide, Styrol oder andere polymerisierbare Monomere aufgepfropft.

Weiterhin geeignet sind durch anionische Polymerisation erhaltene Dien-Polymere, wie Polybutadien, bevorzugt Blockcopolymere, die linear oder sternförmig aufgebaut sind, wie Styrol-Butadien, Styrol-Butadien-Styrol oder andere, bereits bekannte Blockkombinationen und die entsprechenden Isopren-Polymeren.

Der Anteil der Dienpolymeren D) an den erfindungsgemäßen Formmassen beträgt 2 bis 30 Gew.%, vorzugsweise 5 bis 20 Gew.%.

Zusätzlich zu den zwingend vorhandenen Komponenten A) bis D) können die erfindungsgemäßen thermoplastischen Formmassen übliche Zusatzstoffe und Verarbeitungshilfsmittel in einer Menge von bis zu 40 Gew.%, vorzugsweise bis zu 20 Gew.% enthalten. Solche üblichen Zusatzstoffe sind beispielsweise Hitze-und Lichtstabilisatoren, Gleit-und Entformungsmittel, und Färbemittel, wie z.B. Farbstoffe und Pigmente. Weiterhin zählen hierzu Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, ferner Phosphor oder phosphorhaltige Verbindungen.

Auch niedermolekulare oder hochmolekulare Polymere, wie Polystyrol, hochschlagzähes Polystyrol, Highimpact-Polystyrene (HIPS), Styrol-Acrylnitril-Copolymere, Acrylnitril-Butadien-Styrol-Copolymere, Polyester, Polycarbonate, Nitrilkautschuk und Dien-Öle oder Wachse sind als Zusatzstoffe verwendbar.

Herstellungsverfahren zur Herstellung der thermoplastischen Formmassen sind an sich bekannt. Zweckmäßigerweise mischt man die Einzelkomponenten bei Temperaturen von 250 bis 320°C in üblichen Mischvorrichtungen, z.B. Knetern, Banbury-Mischern und Einschneckenextrudern, vorzugsweise jedoch in Zweischneckenextrudern. Um eine möglichst homogene Formmasse zu erhalten, ist eine intensive Durchmischung notwendig; unter bestimmten Umständen können die die Formmasse bildenden Komponenten auch miteinander reagieren.

Bevorzugt wird die Komponente A) mit der Komponente B) so vorgemischt, daß A) und B) zumindest teilweise miteinander reagieren, bevor man sie mit den Komponenten C) und D) abmischt, so daß man das Reaktionsprodukt von A) mit B) einsetzt. Ebenso können die Komponenten C) und D) miteinander vorgemischt werden, bevor sie mit A) und B) abgemischt werden.

Die Mischungsreihenfolge der Komponenten kann variiert werden. Das heißt, es können alle Komponenten gemeinsam gemischt werden oder es können zwei oder drei Komponenten vorgemischt werden, bevor die weiteren Komponenten zugesetzt werden.

Wie bereits erwähnt, zeichnen sich die erfindungsgemäßen Formmassen durch eine außerordentlich hohe Schlagzähigkeit aus. Gegenüber Polyamiden zeigen sie eine stark verminderte Formschrumpfung und eine wesentlich geringere Wasseraufnahme, weswegen sie sich besonders zur Herstellung von Formkörpern mit hoher Dimensionsstabilität eignen. Die Verarbeitung kann durch Blasverformen wie Extrudieren zur Herstellung von Rohren, Tafeln, Flaschen und Beschichtungen erfolgen.

## Beispiele

Bei der Beschreibung der die erfindungsgemäßen Formmassen bildenden Komponenten werden folgende Abkürzungen verwendet. VZ: Viskositätszahl, bestimmt bei 25°C an einer 0,5 %igen Lösung in Dimethylformamid mit einem Ubbelohde-Viskosimeter nach DIN 53 726/8

MFI: Schmelzindex, bestimmt nach DIN 53 735 bei 190°C und 2,16 kg Belastung

$M_n$: Zahlenmittel des Molekulargewichts (vgl. B. Vollmert, Grundriß der makromolekularen Chemie Bd. III, S. 122 ff; E. Vollmert-Verlag Karlsruhe 1979).

Die in den Tabellen I und II aufgeführten Formmassen wurden unter Verwendung der folgenden Komponenten hergestellt.

| Komponente | Verbindung |
|---|---|
| $A_1$ | Polycaprolactam mit Mn = 18.000 |
| $A_2$ | Polyhexamethylenadipinamid mit Mn = 18.900 |
| $B_1$ | Ethylencopolymeres aus 62 Gew.% Ethylen, 32 Gew.% n-Butylacrylat und 6 Gew.% Acrylsäure mit einem MFI von 24 g/10 min |
| $B_2$ | Ethylencopolymeres aus 93 Gew.% Ethylen und 7 Gew.% Acrylsäure mit einem MFI von 11 g/10 min. |
| $B_3$ | Ethylenpolymeres aus 64 Gew.% Ethylen, 35 Gew.% n-Butylacrylat und 1 Gew.% Maleinsäureanhydrid (MSA) mit einem MFI von 30 g/10 min. |
| $B_4$ | Ethylenpolymeres aus 70 Gew.% Ethylen und 30 Gew.% n-Butylacrylat mit einem MFI von 22 g/10 min. |
| $C_1$ | Styrolpolymeres aus 88 Gew.% Styrol und 12 Gew.% Acrylsäure mit einer VZ = 60 (DIN 53 726/8). |
| $C_2$ | Styrolpolymerisat aus 78 Gew.% Styrol, 12 Gew.% n-Butylacrylat und 10 Gew.% Acrylsäure mit einer VZ = 80 |
| $C_3$ | Styrolpolymerisat aus 84 Gew.% Styrol, 10 Gew.% Methylmethacrylat und 6 Gew.% Maleinsäureanhydrid mit einer VZ = 80 |
| $C_4$ | Styrolpolymerisat aus 87 % Styrol und 13 % MSA mit einer VZ = 70 |
| $D_1$ | Dienpolymerisat aus anionisch hergestelltem Polybutadien (Buna CB HX 529 C®, Fa. Bayer) |
| $D_2$ | Dienpolymerisat, hergestellt durch Emulsionspolymerisation von zuerst 70 Teilen Butadien, gefolgt von 30 % Styrol als äußere Schale. |

Die Polymeren A) und B) wurden bei 280°C gemäß den Angaben in den Tabellen 1 und 2 in einem Zweischneckenextruder abgemischt, anschließend in einem zweiten Durchgang bei 280°C mit C) und D) abgemischt.

Die Schädigungsarbeit und die Schädigungskraft werden gemäß DIN 53 443, die Schlagzähigkeit gemäß DIN 53 453, die Izod-Kerbschlagzähigkeit gemäß ISO 180 und die Wärmeformbeständigkeit VST - (Vicat B) nach DIN 53 460 bestimmt.

6

Tabelle 1: Zusammensetzung der Formmassen der Beispiele 1 bis 10 und Meßergebnisse
(alle Angaben in Gewichtsprozent)

| Komponente | | 1* | 2* | 3* | 4 | 5 | 6 | 7 | 8 | 9* | 10 |
|---|---|---|---|---|---|---|---|---|---|---|---|
| $A_1$ | | 76,0 | 55,0 | 45,0 | 58,5 | 42,3 | 44,0 | 36,0 | 48,0 | 47,8 | |
| $A_2$ | | | | | | | | | | | |
| $B_1$ | | | | | 15,4 | 11,5 | 8,0 | 8,0 | 12,0 | | |
| $C_2$ | | | | | | | | | | | |
| $C_4$ | | 24,0 | 45,0 | 55,0 | 18,5 | 34,7 | 36,0 | 44,0 | 32,0 | 39,1 | |
| $D_3$ | | | | | 7,6 | 11,5 | 12,0 | 12,0 | 8,0 | 13,1 | |
| Schädigungsarbeit, | Nm | - | - | - | 20 | 15 | 13 | 10 | 16 | 2 | |
| Schädigungskraft, | N | - | - | - | 3600 | 3600 | 2650 | 2500 | 3000 | 1000 | |
| Schlagzähigkeit | kJ/m$^2$ | 38 | 18 | 12 | k.Br.[1] | k.Br. | k.Br. | k.Br. | k.Br. | 30 | |
| Izod-Kerbschlagz. | J/m | 3,5 | 1,7 | 1,6 | 43 | 9 | 9 | 8 | 15 | 4 | |
| Wärmeformbeständ. | °C | 150 | 137 | 132 | 125 | 110 | 115 | 101 | 120 | 115 | |

* Vergleichsbeispiele

1) kein Bruch

0 232 879

Die Ergebnisse in Tabelle 1 zeigen, daß die erfindungsgemäßen Formmassen hinsichtlich der Schädigungsarbeit, der Schädigungskraft, der Schlagzähigkeit und der Izod-Kerbschlagzähigkeit Formmassen überlegen sind, die nicht alle Komponenten A) bis D) enthalten. Vergleichsbeispiel 9 zeigt insbesondere, daß auch ein Polymerblend aus einem Polyamid, einem Styrol-Maleinsäureanhydridcopolymeren und einem Butadien-Styrolcopolymeren, wie er beispielsweise in der GB-A-1 440 030 beschrieben wird, in den Eigenschaften gegenüber den erfindungsgemäßen Formmassen abfällt.

Tabelle 2: Zusammensetzung der Formmassen der Beispiele 11 bis 17 und Meßergebnisse
(alle Angaben in Gewichtsprozent)

| Komponente | | 11* | 12 | 13 | 14 | 15 | 16 | 17* |
|---|---|---|---|---|---|---|---|---|
| $A_1$ | | 30,0 | 24,6 | | 49,2 | 43,5 | 43,5 | 45,5 |
| $A_2$ | | | | 32,2 | | 4,4 | | |
| $B_1$ | | | 6,6 | | | 8,7 | 4,4 | |
| $B_3$ | | | | 8,1 | 6,6 | | | |
| $B_4$ | | | | | 3,3 | | | |
| $C_4$ | | 70,0 | 57,4 | | | 34,8 | 43,5 | 45,5 |
| $C_3$ | | | | 48,4 | 32,8 | | | |
| $C_1$ | | | | | | 8,6 | | |
| $D_1$ | | | | 11,2 | 8,1 | | | |
| $D_2$ | | | 11,4 | | | | 8,6 | 9,0 |
| Schädigungsarbeit, | Nm | – | 10 | 14 | 20 | 14 | 10 | – |
| Schädigungskraft, | N | – | 2100 | 2250 | 2700 | 2400 | 2100 | – |
| Schlagzähigkeit | kJ/m | 8 | 50 | k.Br.[1] | k.Br. | k.Br. | k.Br. | 18 |
| Izod-Kerbschlagz. | J/m | 0,4 | 7 | 10 | 23 | 13 | 9 | 2 |
| Wärmeformbeständ. | °C | 126 | 115 | 110 | 120 | 120 | 115 | 136 |

* Vergleichsbeispiele

[1] kein Bruch

Die Ergebnisse der Beispiele 11 bis 17 in Tabelle 2 bestätigen die in Tabelle 1 erhaltenen Ergebnisse, d.h. die erfindungsgemäßen Formmassen, die zwingend die Komponenten A) bis D), wie in Anspruch 1 definiert enthalten, sind in ihren mechanischen Eigenschaften anderen Formmassen überlegen.

**Ansprüche**

1. Thermoplastische Formmassen, enthaltend als wesentliche Komponenten
   A) 2 bis 94 Gew.% eines Polyamids,
   B) 2 bis 30 Gew.% eines Copolymeren aus im wesentlichen Ethylen und polymerisierbaren Carbonsäuren und/oder deren funktionellen Derivaten.
   C) 2 bis 80 Gew.% eines Copolymeren aus vinylaromatischen Monomeren und polymerisierbaren Carbonsäuren und/oder deren funktionellen Derivaten und
   D) 2 bis 30 Gew.% eines Homopolymeren eines konjugierten Diens und/oder eines Copolymeren eines konjugierten Diens mit einem copolymerisierbaren Monomeren.

2. Thermoplastische Formmassen nach Anspruch 1, dadurch gekennzeichnet , daß die Komponente B) aufgebaut ist aus

40 bis 99 Gew.% Ethylen und
1 bis 60 Gew.% der polymerisierbaren Carbonsäure und/oder deren funktionellen Derivaten.

3. Thermoplastische Formmassen nach Anspruch 1, dadurch gekennzeichnet, daß die Komponente C) aufgebaut ist aus

50 bis 99 Gew.% des vinylaromatischen Monomeren
1 bis 50 Gew.% der polymerisierbaren Carbonsäure und/oder deren funktionellen Derivaten.

4. Thermoplastische Formmassen nach Anspruch 1, dadurch gekennzeichnet, daß die Komponente D) mindestens 50 Gew.% des konjugierten Diens enthält.

5. Thermoplastische Formmassen nach den Ansprüchen 1 bis 4, erhalten durch Mischen von A) mit B) und anschließende Mischung des erhaltenen Produkts mit C) und D).

6. Thermoplastische Formmassen nach den Ansprüchen 1 bis 4, erhalten durch Mischen von C) mit D) und Abmischen des erhaltenen Produkts mit A) und B).

7. Verwendung der Formmassen gemäß den Ansprüchen 1 bis 6 zur Herstellung von Formkörpern.

8. Formkörper, hergestellt aus Formmassen gemäß den Ansprüchen 1 bis 6 als wesentlichen Komponenten.